# EUROPÄISCHE PATENTANMELDUNG

(11) **EP 2 789 663 A1**
(43) Veröffentlichungstag der Anmeldung: **15.10.2014**
(21) Anmeldenummer: 14161901.5
(22) Anmeldetag: 27.03.2014
(51) Int. Cl.: C09J 7/02, B32B 27/10

(54) **Schutzfolie für glatte Oberflächen, insbesondere Kunststoffoberflächen**

(30) Priorität: 09.04.2013 DE 102013103546
(71) Anmelder: Mondi Gronau GmbH, 48599 Gronau (DE)
(72) Erfinder: Dohe, Dieter, 49525 Lengerich (DE); Korzen, Tania, 48599 Gronau-Epe (DE)
(74) Vertreter: Albrecht, Rainer Harald

(57) **Zusammenfassung**

Die Erfindung betrifft eine coextrudierte temporäre Schutzfolie für glatte Oberflächen mit einer Trägerschicht und einer Haftschicht, wobei die Haftschicht aus einer Haftmischung aus einem hydrierten Styrol-Blockcopolymer und einem Klebeharz besteht, wobei zwischen der Trägerschicht und der Haftschicht eine weiche Haftvermittlerschicht aus einem Ethylen-Vinylacetat-Copolymer angeordnet ist und wobei die Haftschicht und die Haftvermittlerschicht zusammen eine Gesamtdicke zwischen 15 µm und 25 µm aufweisen und die Schichtstärke der Haftschicht kleiner als 10 µm ist. Gegenstand der Erfindung ist auch die Verwendung einer temporären Schutzfolie mit den beschriebenen Merkmalen auf glatten Kunststoffflächen, insbesondere aus PVC oder Polyamid. Erfindungsgemäß saugt sich die Schutzfolie nach dem Anlegen auf der zu schützenden Oberfläche fest an die Oberfläche an, so dass etwaige Lufteinschlüsse zwischen der Folie und der Oberfläche verschwinden.

## Beschreibung

Die Erfindung betrifft eine coextrudierte temporäre Schutzfolie für glatte Oberflächen. Ein besonderer aber nicht ausschließlicher Anwendungsfall ist die Verwendung der Schutzfolie auf Kunststoffoberflächen, insbesondere aus PVC oder Polyamid. Die Schutzfolie soll unter anderem geeignet sein zur Abdeckung von Kunststoffprofilen für Türen oder Fenster und diese bei der Weiterverarbeitung und einem Transport schützen. Ein wesentliches Anforderungsprofil ist, dass die Oberflächenschutzfolie auf dem zu schützenden Gegenstand sofort und ohne Blasenbildung haftet sowie rückstandsfrei wieder entfernt werden kann.

Aus EP 1 425 359 B1 ist eine selbstklebende Schutzfolie für frisch lackierte Oberflächen von Automobilen und Automobilteilen bekannt, die einen polyolefinischen Träger sowie eine klebstofffreie Haftschicht aufweist. Die Haftschicht besteht aus einer Haftmischung aus einem hydrierten Styrol-Block-Copolymer, einem Klebeharz sowie einem flüssigen polymeren Weichmacher, der aus der Gruppe der Polyethylen-Propylen-Copolymere, Polyisobutylen und Polybutylen stammt und eine Erweichungstemperatur von unter 25 °C besitzt. Der polymere Weichmacher ist mit einem Anteil von ca. 10 bis 50 Gew.-% in der Mischung enthalten und bewirkt eine für die Anwendung ausreichende Weichheit der Haftschicht. Die Haftmischung kann sowohl als Lösung auf eine vorgefertigte Trägerfolie aufgebracht oder durch Coextrusion simultan mit der Trägerschicht erzeugt werden.

Die DE 102 35 021 A1 offenbart eine durch Coextrusion herstellbare Oberflächenschutzfolie mit einer Haftschicht, die auf einem hydrierten Styrol-Ethylen-Propylen-Styrol-Blockcopolymer basiert und mit Klebeharz abgemischt ist. Optional ist zwischen der Haftschicht und einem Träger eine Haftvermittler-schicht vorgesehen, die gemäß einem Ausführungsbeispiel aus Polyethylen-Vinylacetat besteht. Es wird beschrieben, dass die Haftschicht eine Dicke zwischen 4 µm und 20 µm aufweisen kann.

Vor diesem Hintergrund liegt der Erfindung die Aufgabe zugrunde, eine kostengünstig herstellbare Oberflächenschutzfolie anzugeben, die auf glatten Oberflächen sofort haftet, die zu schützende Oberfläche blasenfrei abdeckt und rückstandsfrei wieder abgezogen werden kann. Die Schutzfolie soll insbesondere für Kunststoffflächen, beispielsweise aus PVC oder Polyamid, geeignet sein.

Gegenstand der Erfindung und Lösung dieser Aufgabe ist eine coextrudierte temporäre Schutzfolie für glatte Oberflächen mit einer Trägerschicht und einer Haftschicht, wobei die Haftschicht aus einer Haftmischung aus einem hydrierten Styrol-Blockcopolymer und einem Klebeharz besteht, wobei zwischen der Trägerschicht und der Haftschicht eine weiche Haftvermittlerschicht aus einem Ethylen-Vinylacetat-Copolymer angeordnet ist und wobei die Haftschicht und die Haftvermittlerschicht zusammen eine Gesamtdicke zwischen 15 µm und 25 µm aufweisen und die Schichtstärke der Haftschicht kleiner als 10 µm ist.

Die erfindungsgemäße Schutzfolie ist als Coextrusionsfolie kostengünstig herstellbar. Die Haftmischung enthält weder ein weichmachendes Öl noch einen flüssigen polymeren Weichmacher und basiert auf einem weich eingestellten hydrierten Styrol-Block-Copolymer und ist durch Zugabe eines Klebeharzes haftklebrig eingestellt. Erfindungswesentlich ist, dass die Haftschicht durch eine weiche Haftvermittlerschicht ausreichende Stärke hinterfüttert ist, so dass die Haftvermittlerschicht und die Haftschicht zusammen eine Gesamtdicke zwischen 15 und 25 µm aufweisen. Für die aus teuren Polymeren gefertigte Haftschicht ist eine Schichtstärke von weniger als 10 µm ausreichend. Vorzugsweise hat die Haftschicht eine Schichtstärke zwischen 5 und 8 µm.

Die Haftvermittlerschicht besteht vorzugsweise aus einem Ethylen-Vinylacetat-Copolymer (EVA), d. h. einen im Vergleich zu hydrierten Styrol-Blockco-polymeren preiswerten Polymer. Die Haftvermittlerschicht ist weich und wird mit einer ausreichenden Schichtstärke angewendet, so dass auf der Haftseite der coextrudierten Schutzfolie eine ausreichend dicke und für die Anwendung sehr weiche Schicht zur Verfügung steht. Aufgrund dieser Eigenschaften zeichnet sich die erfindungsgemäße Oberflächenschutzfolie durch einen selbstevakuierenden Effekt aus. Dieser Effekt hat zur Folge, dass die Schutzfolie sich nach dem Anlegen auf der zu schützenden Oberfläche fest an die Oberfläche ansaugt und etwaige Lufteinschlüsse zwischen der Folie und der Oberfläche verschwinden. Des Weiteren zeichnet sich die erfindungsgemäße Schutzfolie dadurch aus, dass die im Wesentlichen druckfrei und ohne Erwärmung auf eine zu schützende glatte Oberfläche aufgebrachte Folie sofort an dem Substrat haftet, wobei sich ein hohes Haftniveau einstellt, welches nah an einen Langzeithaftwert heranreicht. Hervorzuheben ist ferner, dass die Schutzfolie rückstandsfrei von der glatten Oberfläche gelöst und anschließend mit gleichem Haftungsniveau erneut wieder auf die Oberfläche aufgebracht werden kann.

Gemäß einer bevorzugten Ausführung der Erfindung besteht die Haftmischung aus einem Styrol-Ethylen/Propylen-Styrol-Blockcopolymer und einem hydrierten Klebeharz. Das Klebeharz kann insbesondere aus einem hydrierten Polymerisat von C8- und C9-Aromaten bestehen und ist zweckmäßig mit einem Anteil von 15 bis 25 Gew.-% in der Haftmischung enthalten. Besonders bevorzugt ist eine Haftmischung aus 80 Gew.-% Styrol-Ethylen/Propylen-Styrol-Blockcopolymer und 20 Gew.-% hydriertem Klebeharz.

Die Trägerschicht kann eine Schichtstärke zwischen 10 µm und 100 µm aufweisen und enthält als Hauptbestandteile vorzugsweise Polyolefine aus der Gruppe der Polyethylene und/oder Polypropylene. Geeignet sind auch Mischungen aus Polyethylen und Polypropylen, wobei der Begriff Polyethylene auch Copolymere des Ethylens mit polaren Copolymeren umfassen soll. Als Propylene kommen Polypropylenhomopolymere, Polypropylen-Random-Copolymere und Polypropylen-Block-Copolymere in Betracht. Die Trägerschicht kann ferner als Additive beispielsweise UV-Stabilisatoren, Pigmente und/oder Antiblockmittel enthalten.

Die erfindungsgemäße Oberflächenschutzfolie kann insbesondere als Rollenware bereitgestellt werden. Damit die Folie leicht und geräuscharm von der Rolle abgezogen werden kann, muss die Oberflächenschutzfolie eine Außenfläche aufweisen, die an der Schicht nicht oder nur wenig haftet. Eine Möglichkeit, das Verblocken der Schutzfolie innerhalb einer Rolle zu vermeiden, besteht darin, dass die Trägerschicht eine geprägte Außenfläche aufweist. Durch die Struktur der Trägerschicht kann eine Kohäsion der Trägerschicht an der benachbarten Haftschicht innerhalb der Folienrolle reduziert werden. Gemäß einer bevorzugten Ausführung der Erfindung weist das Coextrudat jedoch eine auf der Trägerschicht angeordnete zusätzliche Releaseschicht auf, die eine Trennwirkung gegen die Haftschicht hat. Die Releaseschicht kann insbesondere aus einer Mischung aus einer polyolefinischen Substanz und einem polymeren Trennmittel mit Carbamatfunktion bestehen. Sehr wirksam als Trennmittel ist ein Reaktionsprodukt aus einer Reaktion von Polyisocyanat mit einem dihydroxylfunktionalen Poly-Di-Methyl-Siloxan in Anwesenheit einer Aminosäure, welches an den Carbamatfunktionen gebundene Siloxanpolymerfragmente aufweist. Die beschriebene Releaseschicht ermöglicht ein einfaches und geräuschloses Abziehen der Schutzfolie von einer Folienrolle.

Gegenstand der Erfindung ist auch die Verwendung einer temporären Schutzfolie mit den zuvor beschriebenen Merkmalen auf glatten Kunststoffflächen, insbesondere aus PVC oder Polyamid. Die erfindungsgemäße Verwendung ist durch das Merkmal gekennzeichnet, dass die Schutzfolie sich nach dem Anlegen auf der zu schützenden Oberflächen fest an die Oberfläche ansaugt, so dass etwaige Lufteinschlüsse zwischen der Folie und der Oberfläche verschwinden.

Die Haftkraft erfindungsgemäßer Schutzfolien wurde in Anlehnung an die DIN EN 1939:2003 gemessen. Dabei wurden Haftwerte auf Edelstahl zwischen 0,35 und 1,1 N/cm gemessen. Die Haftkräfte wurden bei einem Abzugswinkel von 180° und bei einer Zuggeschwindigkeit von 100 mm/min. bestimmt. Die Haftschicht der untersuchten Folien bestand aus einer Haftmischung aus 80 Gew.-% eines Styrol-Ethylen/Poropylen-Styrol-Blockcopolmers (Styrolanteil 13 Gew.-%) und 20 Gew.-% eines hydrierten Klebeharzes. Als Haftvermittler wurde ein Ethylen-Vinylacetat-Copolymer (32 % VA-Anteil) verwendet. Die Gesamtstärke der Haftschicht und der Haftvermittlerschicht wurde zwischen 15 µm und 25 µm variiert, wobei die Haftschicht eine Schichtstärke zwischen 5 und 15 µm und die Haftvermittlerschicht eine Schichtstärke zwischen 3 und 10 µm aufwies. Die Kernschicht bestand aus einer Mischung aus Polyethylen und Polypropylen und hatte eine Schichtstärke die zwischen 10 µm und 100 µm variiert wurde. Zusätzlich war eine Releaseschicht mit einer Schichtstärke von 5 bis 15 µm Stärke vorgesehen. Die Schutzfolie wurde als Coextrudat aus den vorgenannten Schichten gefertigt.

## Patentansprüche

1. Coextrudierte temporäre Schutzfolie für glatte Oberflächen mit einer Trägerschicht und einer Haftschicht,
wobei die Haftschicht aus einer Haftmischung aus einem hydrierten Styrol-Blockcopolymer und einem Klebeharz besteht,
wobei zwischen der Trägerschicht und der Haftschicht eine weiche Haftvermittlerschicht aus einem Ethylen-Vinylacetat-Copolymer angeordnet ist und
wobei die Haftschicht und die Haftvermittlerschicht zusammen eine Gesamtdicke zwischen 15 µm und 25 µm aufweisen und die Schichtstärke der Haftschicht kleiner als 10 µm ist.

2. Schutzfolie nach Anspruch 1, **dadurch gekennzeichnet, dass** die Haftmischung aus einem Styrol-Ethylen/Propylen-Styrol-Blockcopolymer und einem hydrierten Klebeharz besteht.

3. Schutzfolie nach Anspruch 1 oder 2, **dadurch gekennzeichnet, dass** das Klebeharz aus einem hydrierten Polymerisat von C8- und C9-Aromaten besteht.

4. Schutzfolie nach einem der Ansprüche 1 bis 3, **dadurch gekennzeichnet, dass** das Klebeharz mit einem Anteil von 15 bis 25 Gew.-% in der Haftmischung enthalten ist.

5. Schutzfolie nach einem der Ansprüche 1 bis 4, **dadurch gekennzeichnet, dass** die Trägerschicht als Hauptbestandteil Polyolefine aus der Gruppe der Polyethylene und/oder Polypropylene aufeist.

6. Schutzfolie nach Anspruch 5, **dadurch gekennzeichnet, dass** die Trägerschicht als Additive UV-Stabilisatoren, Pigmente, und/oder Antiblockmittel enthält.

7. Schutzfolie nach einem der Ansprüche 1 bis 6, **dadurch gekennzeichnet, dass** die Trägerschicht eine geprägte Außenfläche aufweist.

8. Schutzfolie nach einem der Ansprüche 1 bis 6, **dadurch gekennzeichnet, dass** das Coextrudat eine auf der Trägerschicht angeordnete zusätzliche Releaseschicht aufweist, die eine Trennwirkung gegen die Haftschicht hat.

9. Schutzfolie nach Anspruch 8, **dadurch gekennzeichnet, dass** die Releaseschicht aus einer Mischung aus einer polyolefinischen Substanz und einem polymeren Trennmittel mit Carbamatfunktionen besteht.

10. Verwendung einer temporären Schutzfolie nach einem der Ansprüche 1 bis 9 auf glatten Kunststoffflächen, insbesondere aus PVC oder Polyamid, wobei die Schutzfolie sich nach dem Anlegen auf der zu schützenden Oberfläche fest an die Oberfläche ansaugt, so dass etwaige Lufteinschlüsse zwischen der Folie und der Oberfläche verschwinden.
